# EUROPEAN PATENT SPECIFICATION

(11) **EP 2 515 009 B1**
(45) Date of publication and mention of the grant of the patent: **05.08.2015**
(21) Application number: 11195464.0
(22) Date of filing: 23.12.2011
(51) Int. Cl.: F16H 61/28

(54) **Transmission apparatus and saddle-riding type vehicle**
Getriebevorrichtung und Grätschsitzfahrzeug
Appareil de transmission et véhicule de type à enfourcher

(30) Priority: 20.04.2011 JP 2011094413
(43) Date of publication of application: 24.10.2012
(73) Proprietor: Yamaha Hatsudoki Kabushiki Kaisha, Shizuoka-ken Shizuoka 438-8501 (JP)
(72) Inventor: Ohata, Shinobu, Iwata-shi, Shizuoka 438-8501 (JP); Minami, Kengo, Iwata-shi, Shizuoka 438-8501 (JP)
(74) Representative: Grünecker Patent- und Rechtsanwälte PartG mbB

(56) References cited:
- EP-A1- 1 271 010
- DE-A1-102008 000 642
- US-A1- 2010 082 210

## Description

The present invention relates to a transmission apparatus and a saddle-riding type vehicle, and in particular to movement control of a movable gear included in a dog clutch transmission mechanism.

A transmission apparatus according to the preamble of claim 1 and according to the preamble of claim 7 is known from US 2010/0082210 A1.

Conventionally, two-wheeled motor vehicles having a dog clutch transmission mechanism, for performing a shift operation using an actuator have been known.

A dog clutch transmission mechanism has a stationary gear capable of relative rotation relative to a shaft but incapable of movement in the shaft direction, and a movable gear incapable of relative rotation relative to a shaft but capable of movement in the shaft direction, and mutually engageable dogs are formed on the respective lateral surfaces of the movable gear and the stationary gear. In such a transmission mechanism, in shifting, engagement between the dog of a stationary gear for a speed before shifting (hereinafter referred to as a pre-shifting stationary gear) and the dog of a movable gear is released (a dog disengaged stage). Thereafter, the dog of the above mentioned or different movable gear is engaged with the dog of a stationary gear for a speed after shifting (hereinafter referred to as a post-shifting stationary gear) (a dog engaged stage). In the above, the dog of the movable gear may bump into the dog of the post-shifting stationary gear (a dog bumping stage) before the dog engaged stage.
Patent Document 1: Japanese Patent Laid-open Publication No. Hei 11-148551

Patent Document 1 describes that a sleeve is moved at a high speed to realize prompt shifting, and that braking is applied to a drive motor when the sleeve reaches a dowel-in position to thereby modify the impact in bumping between a shift spindle and a stopper. According to Patent Document 1, "dowel-in" is defined as that a dowel of the sleeve is fit into a slot formed on the gear, and the dog bumping stage mentioned above corresponds to a stage in which the dowel of the sleeve bumps into a part other than the slot on the gear. In view of the above, braking when the sleeve reaches a dowel-in position means braking after the dog bumping stage. That is, the dowel of the sleeve has already bumped into the part other than the slot on the gear at a high speed. In bumping, a friction force is caused between the dowel of the sleeve and the part other than the slot on the gear, and the friction force hinders relative movement of the two. This results in delay in engagement between the dowel and the slot, as a result of which prompt shifting may not be realized. This problem becomes more remarkable as the moving speed of the sleeve is increased for the purpose of realizing prompt shifting.

Further, Patent Document 1 describes that re-pushing control is performed when shift change is not duly performed. In the re-pushing control, a sleeve pushing torque is temporarily weakened, and then increased so that the sleeve is pushed again with a stronger torque. Note that shift change not being duly performed refers to the sleeve not reaching the dowel-in position, with the dowel of the sleeve left bumping on the part other than the slot on the gear. According to Patent Document 1, the dowel of the sleeve has already bumped into the part other than the slot on the gear at a high speed. Change in strength of the pushing torque after such high speed bumping will not contribute to prompt shifting as the change is applied after the relative speed of the two have already dropped.

Moreover, such a problem becomes more remarkable as a force to be applied to a movable gear is increased to release the engagement at the dog disengaged stage. That is, a large load is kept being applied to the actuator that drives the movable gear until the engagement between the dog of the pre-shifting stationary gear and that of the movable gear is released, and at the moment when the engagement is released, the load turns to be a force pushing the movable gear toward the post-shifting stationary gear. Consequently, the dog of the movable gear fiercely bumps into the dog of the post-shifting stationary gear. In this case, remarkable delay is caused in shifting from the dog bumping stage to the dog engaged stage. Regarding this point, Patent Document 1 does not include a description on the dog disengaged stage. In this view, it is considered that the speed at which the dowel of the sleeve bumps into the part other than the slot is originally not so high that delays engagement.

The present invention has been conceived in view of the above described problem, and aims to provide a transmission apparatus and a saddle-riding type vehicle capable of prompt shifting and modification of the impact in bumping between dogs.

In order to solve the above described object, according to one embodiment of the present invention, there is provided a transmission apparatus comprising the features of claim 1.

According to another embodiment of the present invention, there is provided a transmission apparatus comprising the features of claim 7.

According to a further embodiment of the present invention, there is provided a saddle-riding type vehicle having the above described transmission apparatus. A saddle-riding type vehicle is a vehicle in which a user straddles a seat to sit thereon, being, e.g., a two-wheeled motor vehicle (including a scooter), an all-terrain vehicle, a snowmobile, and so forth.

According to the present invention, as a force directed opposite from the direction toward the second stationary gear is applied to a movable gear before the dog of the movable gear contacts the dog of the second stationary gear, it is possible to modify bumping between the dogs and also to realize prompt shifting.
Fig. 1 is a side view of a two-wheeled motor vehicle;
Fig. 2 is a schematic diagram of a torque transmission path;
Fig. 3A is a diagram explaining a dog disengaged stage;
Fig. 3B is a diagram explaining a dog bumping stage;
Fig. 3C is a diagram explaining a dog engaged stage;
Fig. 4 is a block diagram showing an example structure of a transmission apparatus;
Fig. 5 is a block diagram showing an example functional structure of a control device;
Fig. 6 is a flowchart of an example operation of the control device;
Fig. 7 is a timing chart of an example operation of the control device;
Fig. 8 is a timing chart of an example operation of the control device;
Fig. 9 is a block diagram showing an example functional structure of the control device; and
Fig. 10 is a timing chart of an example operation of the control device.

An embodiment of a transmission apparatus and a saddle-riding type vehicle according to an embodiment of the present invention will be described referring to the accompanying drawings.

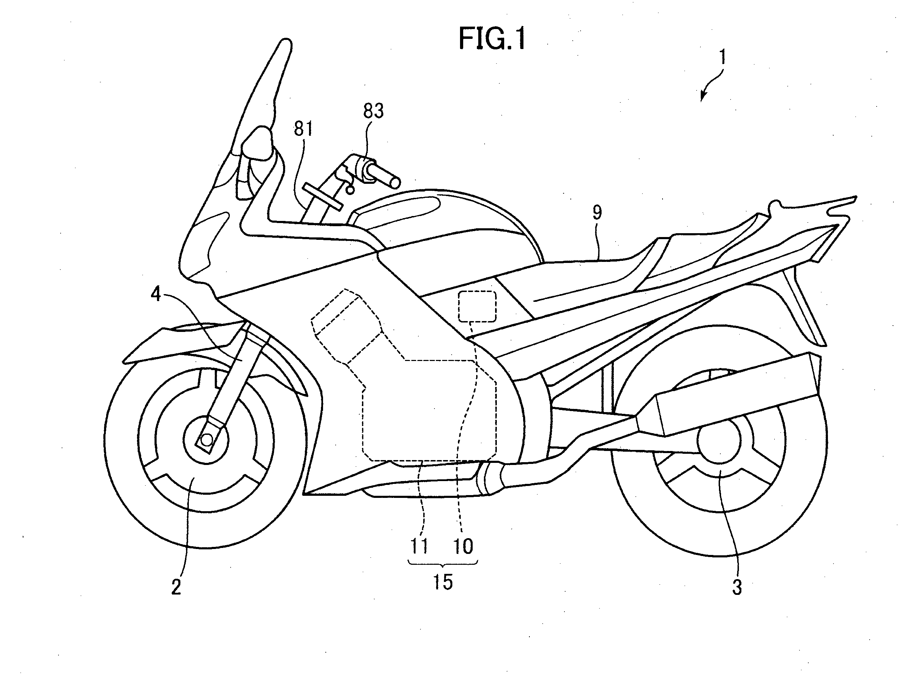

Fig. 1 is a side view of a two-wheeled motor vehicle 1. The two-wheeled motor vehicle 1 is one example of a saddle-riding type vehicle according to the present invention, and has an engine unit 11. A front wheel 2 provided in the forward direction of the engine unit 11 is supported by the lower end of a front fork 4. A steering shaft 81 rotatably supported at the forwardmost part of a vehicle frame (not shown) is connected to an upper part of the front fort 4. A steering 83 is mounted on an upper part of the steering shaft 81. The steering 83, the front fork 4, and the front wheel 2 are provided so as to integrally rotate in the left-right direction with the steering shaft 81 as the center. A seat 9 on which a passenger can straddle to sit thereon is mounted behind the steering 83. A rear wheel 3 is provided to the rear of the engine unit 11. A torque output from the engine unit 11 is transmitted to the rear wheel 3 through a torque transmitting member (not shown), such as a chain, a belt, and a shaft. A control device 10 is provided to the two-wheeled motor vehicle 1. The engine unit 11 and the control device 10 constitute a transmission apparatus 15 according to one example of the present invention.

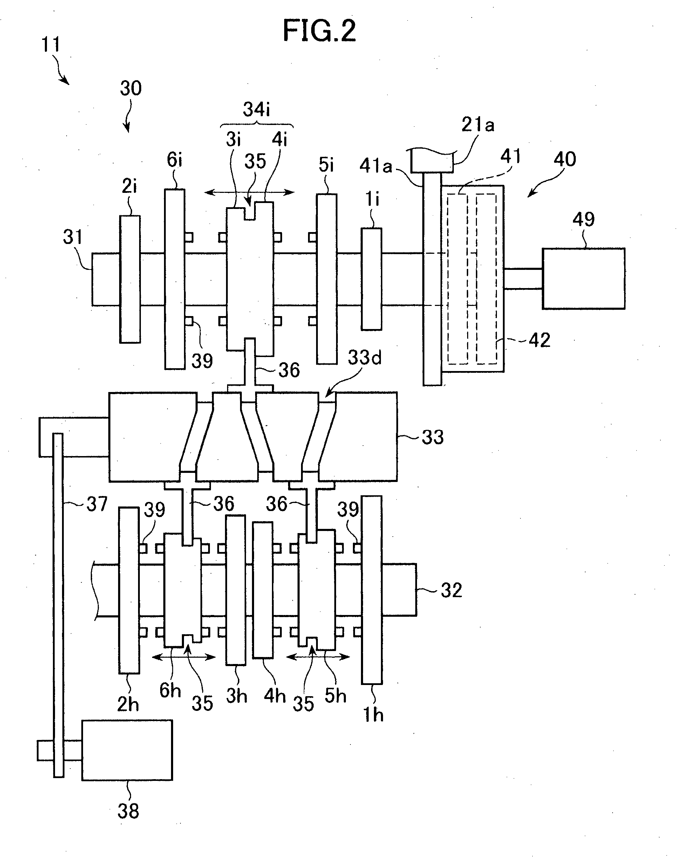

Fig. 2 is a diagram schematically showing a torque transmission path. The engine unit 11 comprises a clutch 40, a dog clutch transmission mechanism 30, and a shift actuator 38. The clutch 40 has a driving member 41 capable of relative rotation relative to the input shaft 31 of the transmission mechanism 30. The driving member 41 of the clutch 40 has a primary gear 41a, which is engaged with a primary gear 21a mounted on a crank shaft (not shown) . The clutch 40 has a following member 42 incapable of relative rotation relative to the input shaft 31 of the transmission mechanism 30. The clutch 40 is, e. g. , a single-plate or multi-plate friction clutch. The driving member 41 and the following member 42 are pressed to each other in the shaft direction so that torque is transmitted between the two members 41, 42. The driving member 41 may be, e.g., a friction disk, while the following member 42 may be, e.g., a clutch disk.

The clutch 40 has a clutch actuator 49 for changing the state of engagement between the driving member 41 and the following member 42 according to an instruction from the control device 10. The clutch actuator 49 comprises, e.g., an electric motor. A driving force of the electric motor is transmitted to either one of the driving member 41 and the following member 42 by means of hydraulic pressure or a rod to press or separate the driving member 41 and the following member 42 with respect to each other.

The transmission mechanism 30 comprises the input shaft 31 having a plurality of gears 1i to 6i mounted thereon, an output shaft 32 having a plurality of gears 1h to 6h mounted thereon to be engaged with these gears 1i to 6i, and a shift cam 33 having a shift fork 36. The input shaft 31 is connected to the following member 42 of the clutch 40, while the output shaft 32 is connected to the wheel shaft of the rear wheel 3 via a torque transmitting member, such as a chain, a belt, and a shaft. The gear 1i is engaged with the gear 1h with a shift reduction rate corresponding to the first speed. The gear 2i is engaged with the gear 2h with a shift reduction rate corresponding to the second speed. The gear 3i is engaged with the gear 3h with a shift reduction rate corresponding to the third speed. The gear 4i is engaged with the gear 4h with a shift reduction rate corresponding to the fourth speed. The gear 5i is engaged with the gear 5h with a shift reduction rate corresponding to the fifth speed. The gear 6i is engaged with the gear 6h, with the shift reduction rate thereof gears corresponding to the sixth speed.

Of each gear pair corresponding to a respective shift step, one gear is capable of relative rotation relative to the shaft where the gear is provided, while the other gear is engaged spline with the shaft where the gear is provided and thus incapable of relative rotation relative to that shaft. In this embodiment, the gears 1i to 4i are incapable of relative rotation relative to the input shaft 31, while the gears 1h to 4h are capable of relative rotation relative to the output shaft 32. The gears 5i, 6i are capable of relative rotation relative to the input shaft 31, while the gears 5h, 6h are incapable of relative rotation relative to the output shaft 32. Accordingly, in a neutral condition with no particular shift step set, the gear parts 1i-1h to 4i-4h follow the input shaft 31, while the gear pairs 5i-5h, 6i-6h follow the output shaft 32. Note that the gears 3i and 4i are integrally formed (hereinafter referred to as a gear 34i) .

The gear capable of relative rotation relative to the shaft is incapable of movement in the shaft direction of the shaft where the gear is provided, and is thus referred to as a stationary gear. Meanwhile, some of the gears incapable of relative rotation relative to the shaft are capable of movement in the shaft direction of the shaft where the gear is provided, and is thus referred to as a movable gear. A movable gear can move between two stationary gears. In this embodiment, the gears 5i, 6i, 1h to 4h are stationary gears, while the gears 34i, 5h, 6h are movable gears. The gear 34i can move between the gears 5i and 6i in the shaft direction of the input shaft 31. The gear 5h can move between the gears 1h and 4h in the shaft direction of the output shaft 32. The gear 6h can move between the gears 2h and 3h in the shaft direction of the output shaft 32. Each gear 34i, 5h, 6h, being movable gears, has an engagement slot 35 formed thereon, in which a shift fork 36 provided to the shift cam 33 is fit.

The movable gear is engageable with the stationary gear by means of a dog clutch. In this embodiment, a dog 39 is formed on each of the both lateral sides of each gear 34i, 5h, 6h, being a movable gear, while a dog 39 is formed on a lateral side of each gear 51, 6i, 1h to 4h, or a stationary gear, that faces a movable gear. With the dogs 39 engaged with each other, a torque from the input shaft 31 is transmitted to the output shaft 32. For example, with the dog 39 of the gear 34i engaged with the dog 39 of the gear 5i, rotation of the input shaft 31 is transmitted from the gear 34i via the dogs 39 to the gear 5i, which in turn rotates integrally with the input shaft 31.

A plurality of cam slots 33d are formed on the shift cam 33, of which positions in the shaft direction vary depending on the rotation angle. The shift fork 36 is fit in the respective cam slot 33d. The shift cam 33 is connected to the shift actuator 38 via the shift rod 37, and the shift actuator 38 generates a drive force for rotating the shift cam 33. The shift actuator 38 comprises, e.g., an electric motor. With the shift actuator 38 rotating, the rotation is transmitted via the shift rod 37 to the shift cam 33, which in turn rotates. The rotation of the shift cam 33 is converted into movement in the shaft direction of the shift fork 36 fit in the cam slot 33d. As a result, the gears 34i, 5h, 6h, being movable gears, move in the shaft direction, whereby the shift steps are switched. As described above, the gears 34i, 5h, 6h, being movable gears, move in the shaft direction by a drive force generated by the shift actuator 38.

In shifting, a state in which a movable gear is engaged with a stationary gear for a speed before the shifting (pre-shifting stationary gear) is switched to a state in which a movable gear is engaged with a stationary gear for a speed after the shifting (post-shifting stationary gear). According to a first shifting aspect, a movable gear engaged with a pre-shifting stationary gear is the same as a movable gear engaged with a post-shifting stationary gear. For example, in shifting from the second speed to the third speed, the gear 6h moves from a state in which the gear 6h is engaged with the gear 2h toward the gear 3h and then is engaged with the gear 3h. In switching from the fifth speed to the sixth speed, the gear 34i moves from a state in which the gear 34i is engaged with the gear 5i toward the gear 6i and then is engaged with the gear 6i.

Meanwhile, according to a second shifting aspect, a movable gear engaged with a pre-shifting stationary gear is different from a movable gear engaged with a post-shifting stationary gear. For example, in shifting from the first speed to the second speed, the gear 5h moves from a state in which the gear 6h is engaged with the gear 1h so as to depart from the gear 1h, and the gear 6h then moves toward the gear 2h and is engaged with the gear 2h. In shifting from the third speed to the forth gear, the gear 6h moves from a state in which the gear 6h is engaged with the gear 3h so as to depart from the gear 3h, and the gear 5h then moves toward the gear 4h and is engaged with the gear 4h. In shifting from the fourth speed to the fifth speed, the gear 5h moves from a state in which the gear 5h is engaged with the gear 4h so as to depart from the gear 4h, and the gear 34i then moves toward the gear 5i and is engaged with the gear 5i.

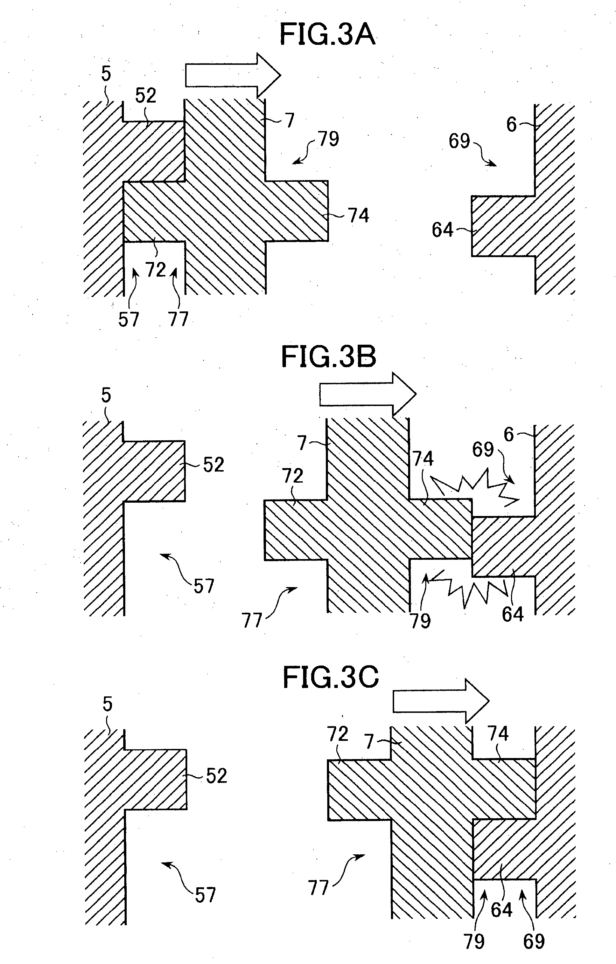

In switching the engagement between a movable gear and a stationary gear, as described above, the movable gear sequentially experiences three stages (a dog disengaged stage, a dog bumping stage, a dog engaged stage) to be described below. Fig. 3A is a diagram showing a dog disengaged stage; Fig. 3B is a diagram showing a dog bumping stage; and Fig. 3C is a diagram showing a dog engaged stage. These diagrams are schematic diagrams with a gear rotation direction in the up-down direction thereof. An arrow in these diagrams indicates the moving direction of the movable gear 7 moving toward the second stationary gear 6. The movable gear 7 corresponds to the respective gears 34i, 5h, 6h in Fig. 2, and the first stationary gear 5 and the second stationary gear 6 correspond to the respective gears 5i, 6i, 1h to 4h in Fig. 2. The first stationary gear 5 corresponds to a pre-shifting stationary gear, while the second stationary gear 6 corresponds to a post-shifting stationary gear.

A dog 72 is formed on a lateral surface of the movable gear 7 that faces the first stationary gear 5, projecting toward the first stationary gear 5, and a concave insertion part 77 is formed adjacent to the dog 72 in the gear rotation direction. Note that a convex and a concave formed by the convex dog 72 and the concave insertion part 77, respectively, have relative relationship, and specifically, a part without the convex dog 72 is referred to as the concave insertion part 77, and a part without the concave insertion part 77 is referred to as the convex dog 72. Similarly, a dog 52 is formed on a lateral surface of the first stationary gear 5 that faces the movable gear 7, projecting toward the movable gear 7, and a concave insertion part 57 is formed adjacent to the dog 52 in the gear rotation direction. When the dog 72 of the movable gear 7 is inserted into the insertion part 57 of the first stationary gear 5 and the dog 52 of the first stationary gear 5 is inserted into the insertion part 77 of the movable gear 7, the dog 72 of the movable gear 7 is engaged with the dog 52 of the first stationary gear 5. With the above, a torque from one of the movable gear 7 and the first stationary gear 5 is transmitted to the other via the dogs 72, 52.

A dog 74 is formed on a lateral surface of the movable gear 7 that faces the second stationary gear 6, projecting toward the second stationary gear 6, and a concave insertion part 79 is formed adjacent to the dog 74 in the gear rotation direction. Note that a convex and a concave formed by the convex dog 74 and the concave insertion part 79, respectively, have relative relationship, and specifically, a part without the convex dog 74 is referred to as the concave insertion part 79, and a part without the concave insertion part 79 is referred to as the convex dog 74. Similarly, a dog 64 is formed on a lateral surface of the second stationary gear 6 that faces the movable gear 7, projecting toward the movable gear 7, and a concave insertion part 69 is formed adjacent to the dog 64 in the gear rotation direction. When the dog 74 of the movable gear 7 is inserted into the insertion part 69 of the second stationary gear 6 and the dog 64 of the second stationary gear 6 is inserted into the insertion part 79 of the movable gear 7, the dog 74 of the movable gear 7 is engaged with the dog 64 of the second stationary gear 6. With the above, a torque from one of the movable gear 7 and the second stationary gear 6 is transmitted to the other via the dogs 74, 64.

At the dog disengaged stage shown in Fig. 3A, the engagement between the dog 72 of the movable gear 7 and the dog 52 of the first stationary gear 5 is released. Specifically, when a drive force of the shift actuator 38 is transmitted from the shift cam 33 to the movable gear 7, and the movable gear 7 thus starts moving toward the second stationary gear 6, the dog 72 of the movable gear 7 comes off the insertion part 57 of the first stationary gear 5, and the dog 52 of the first stationary gear 5 comes off the insertion part 77 of the movable gear 7. In the above, as the dog 72 of the movable gear 7 and the dog 52 of the first stationary gear 5 are forced to contact each other by high pressure, separation of the movable gear 7 from the stationary gear 5 requires an increased output from the shift actuator 38 to apply a stronger force to the movable gear 7.

At the dog bumping stage shown in Fig. 3B, the dog 74 of the movable gear 7 bumps into the dog 64 of the second stationary gear 6. That is, at the dog bumping stage, the dog 74 of the movable gear 7 bumps into a part other than the insertion part 69 on the second stationary gear 6. In the above, when the moving speed of the movable gear 7 is high, the relative rotation speed of the movable gear 7 and the second stationary gear 6 drops due to the bump between the dog 74 of the movable gear 7 and the dog 64 of the second stationary gear 6. This may cause delay in shifting to the dog engaged stage. Therefore, preferably, the moving speed of the movable gear 7 is decreased to modify the impact in bumping into the second stationary gear 6.

However, when a strong force is applied to the movable gear 7 to release the engagement between the movable gear 7 and the first stationary gear 5 at the dog disengaged stage, the movable gear 7 is pushed at a high speed by the force at the moment when the engagement is released, and consequently highly likely fiercely bumps into the second stationary gear 6. If this occurs, remarkable delay in shifting to the dog engaged stage is resulted.

At the dog engaged stage shown in Fig. 3C, the dog 74 of the movable gear 7 is engaged with the dog 64 of the second stationary gear 6. That is, the dog 74 of the movable gear 7 is inserted into the insertion part 69 of the second stationary gear 6, and the dog 64 of the second stationary gear 6 is inserted into the insertion part 79 of the movable gear 7, so that the dog 74 of the movable gear 7 and the dog 64 of the second stationary gear 6 are brought to contact each other in the gear rotation direction. In the above, preferably, a pushing force is applied to the movable gear 7 to assist insertion of the dogs 74, 64 in order to accelerate completion of engagement.

Note that the dog disengaged stage may directly shift to the dog engaged stage without intervention of the dog bumping stage. This occurs when the dog 74 of the movable gear 7 is inserted directly into the insertion part 69 without bumping into the dog 64 of the second stationary gear 6.

The above described description on Figs. 3A to 3C is applicable also to a case according to the second shifting aspect in which a movable gear engaged with a pre-shifting stationary gear differs from a movable gear engaged with a post-shifting stationary gear. That is, when a strong torque is applied to the shift cam 33 (see Fig. 2) in order to release engagement between the pre-shifting stationary gear and the first movable gear at the dog disengaged stage, the shift cam 33 abruptly starts rotating at the moment when the engagement is released. In the above, the moving speeds of not only the first movable gear but also all movable gears connected to the shift cam 33 increase, and consequently, the second movable gear fiercely bumps into the post-shifting stationary gear. Therefore, the following description on control will be similarly applied to the second shifting aspect.

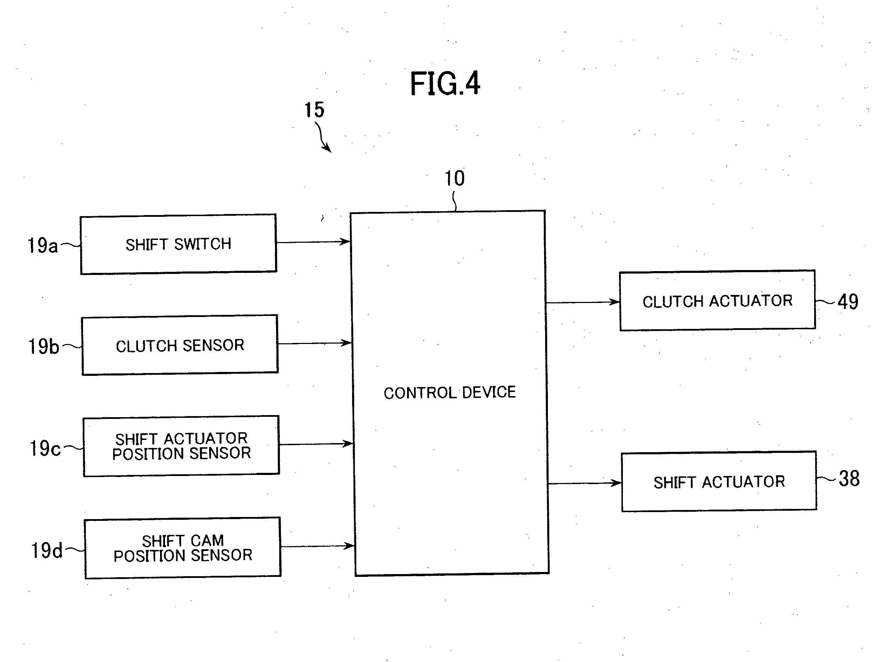

Fig. 4 is a block diagram explaining an example structure of the transmission apparatus 15. The transmission apparatus 15 comprises a shift switch 19a, a clutch sensor 19b, a shift actuator position sensor 19c, and a shift cam position sensor 19d. These sensors are connected to the control device 10.

The shift switch 19a is a switch operated by a passenger, and outputs a shift instruction (a shift up instruction to advance the shift step or a shift down instruction to reverse the shift step) to the control device 10. The shift switch 19a includes a shift up switch and a shift down switch.

The clutch sensor 19b comprises, e.g., a potentiometer for outputting a signal according to the position of a pressure plate (not shown) included in the clutch 40. The control device 10 can determine a state (fully engaged state, half-engaged state, release state) of the clutch 40, based on the signal output from the clutch sensor 19b.

The shift actuator position sensor 19c comprises, e.g., a potentiometer for outputting a voltage signal according to the rotation angle of the shift actuator 38. The control device 10 can determine the current position and moving speed of the movable gear 7 and the current shift step, based on the signal output from the shift actuator position sensor 19c.

The shift cam position sensor 19d comprises, e.g., a potentiometer for outputting a voltage signal according to the rotation angle of the shift cam 33. The control device 10 can determine the current position and moving speed of the movable gear 7 and the current shift step, based on the signal output from the shift cam position sensor 19d.

The control device 10 comprises a CPU (Central Processing Unit) and a memory such as a ROM (Read Only Memory) and a RAM (Random Access Memory).

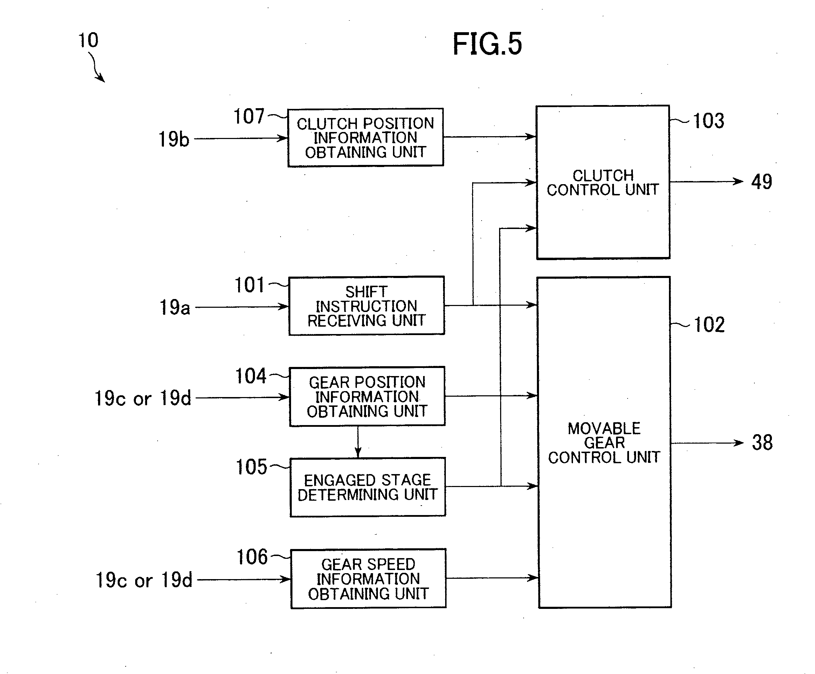

Fig. 5 is a block diagram showing an example functional structure of the control device 10. The control device 10 comprises a shift instruction receiving unit 101, a movable gear control unit 102, a clutch control unit 103, a gear position information obtaining unit 104, an engaged stage determining unit 105, a gear speed information obtaining unit 106, and a clutch position information obtaining unit 107. The respective units included in the control device 10 are realized by executing a program stored in the memory by the CPU of the control device 10.

The shift instruction receiving unit 101 receives a shift instruction output from the shift switch 19a, and outputs the received shift instruction to the movable gear control unit 102 and the clutch control unit 103.

Upon receipt of the shift instruction from the shift instruction receiving unit 101, the movable gear control unit 102 drives the shift actuator 38 to switch the shift step set by the transmission mechanism 30 to a step according to the shift instruction. Specifically, the movable gear control unit 102 includes a pulse width modulator for converting an input signal into a pulse width modulation (PWM) signal, and applies PWM control to the shift actuator 38. The pulse width modulator generates a PWM signal having a duty ratio corresponding to an output target value of the shift actuator 38. Alternatively, not being limited to the above, the movable gear control unit 102 may supply a voltage corresponding to the output target value to the shift actuator 38.

Upon receipt of the shift instruction from the shift instruction receiving unit 101, the clutch control unit 103 drives the clutch actuator 49 to leave the clutch 40 in a release state so that the transmission mechanism 30 can set a clutch step. The clutch control unit 103 as well applies PWM control to the clutch actuator 49.

The gear position information obtaining unit 104 obtains position information on the movable gear 7, based on an output signal from the shift cam position sensor 19d, and outputs the obtained position information to the movable gear control unit 102 and the engaged stage determining unit 105. Alternatively, not being limited to the above, the gear position information obtaining unit 104 may obtain position information on the movable gear 7, based on the output signal from the shift actuator position sensor 19c.

The engaged stage determining unit 105 determines, based on the position information on the movable gear 7, at which of the dog disengaged stage, the dog bumping stage, and the dog engaged stage the movable gear 7 currently is. At which step the movable gear 7 currently is is determined based on, e.g., a relationship between the respective thresholds corresponding to the dog disengaged stage, the dog bumping stage, and the dog engaged stage, and a signal value of the shift actuator position sensor 19c or the shift cam position sensor 19d.

The gear speed information obtaining unit 106 obtains speed information on the movable gear 7, based on the output signal from the shift cam position sensor 19d, and outputs the obtained speed information to the movable gear control unit 102. Alternatively, not being limited to the above, the gear speed information obtaining unit 106 may obtain speed information on the movable gear 7, based on the output signal from the shift actuator position sensor 19c.

The clutch position information obtaining unit 107 obtains information indicating the state (a fully engaged state, a half-engaged state, a release state) of the clutch 40, based on the output signal from the clutch sensor 19b, and outputs the obtained information to the clutch control unit 103.

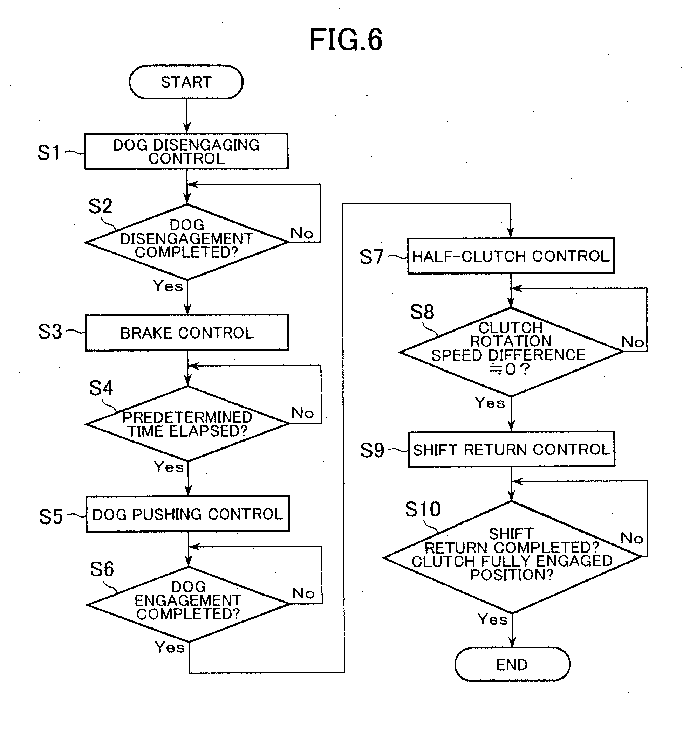

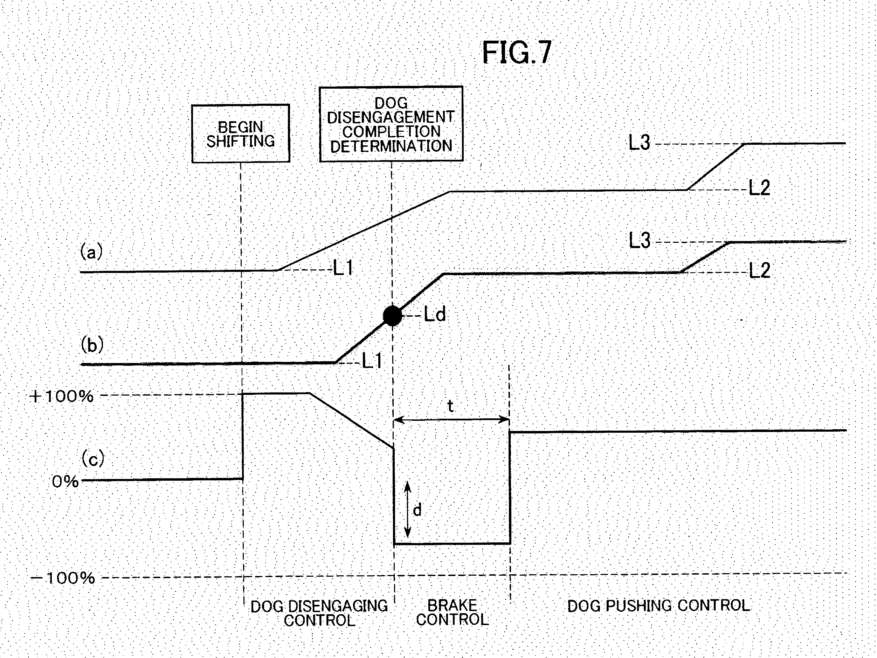

Fig. 6 is a flowchart of an example operation of the control device 10. Fig. 7 is a timing chart of an example operation of the control device 10. Specifically, Fig. 7 shows a part corresponding to the process at S1 to S6 shown in Fig. 6.

In Fig. 7, the upper line (a) relates to a rotation angle of the shift actuator 38. The middle line (b) relates to a rotation angle of the shift cam 33. As to the lines (a) and (b), the abscissa indicates time, while the ordinate indicates a rotation angle. The respective rotation angles of the shift actuator 38 and the shift cam 33 change from the position L1 at the dog disengaged stage (see Fig. 3A) via the position L2 at the dog bumping stage (see Fig. 3B) to the position L3 at the dog engaged stage (see Fig. 3B) . As the shift actuator 38 and the shift cam 33 are connected to each other via a rigid shift rod 37, change profiles of the rotation angles are similar to each other, though times for change of the rotation angles do not fully coincide with each other. In Fig. 7, the lower line (c) indicates a duty ratio of a PWM signal to be given to the shift actuator 38. As to the line (c), the abscissa indicates time, while the ordinate indicates a duty ratio. The duty ratio varies between -100% and +100%.

Initially, the movable gear control unit 102 begins dog disengaging control (S1). In the dog disengaging control, the movable gear control unit 102 outputs a positive voltage to the shift actuator 38. A positive voltage here refers to a voltage for applying a force toward the second stationary gear 6 to the movable gear 7. Specifically, in the dog disengaging control, the movable gear control unit 102 outputs a PWM signal having a duty ratio according to the difference between a target position and the current position of the movable gear 7, the target position being the position L2 at the dog bumping stage. Therefore, a positive PWM signal having the maximum duty ratio (e.g., 100%) is output at the initial stage in the dog disengaging control. Thereafter, with the engagement between the dogs 72, 52 of the movable gear 7 and of the first stationary gear 5 released, the duty ratio of the PWM signal begins decreasing as the movable gear 7 approaches the second stationary gear 6. With the above, it is possible to reduce the moving speed of the movable gear 7 after release of the engagement, while ensuring a force to release the engagement between the dogs 72, 52. Note that, not being limited to the above described aspect, a PWM signal may always have the maximum duty ratio during a period with the dog disengaging control, or alternatively, the maximum duty ratio may gradually decrease after elapse of a predetermined period of time.

The engaged stage determining unit 105 monitors completion of the dog disengaged stage (S2), and upon determination of completion of the dog disengaged stage (S2: YES), notifies the movable gear control unit 102 of the completion. For example, the engaged stage determining unit 105 may determine completion of the dog disengaged stage when the shift cam 33 reaches a predetermined dog disengagement determination position Ld.

Note that, not being limited to the above described aspect, the engaged stage determining unit 105 may measure a period of time elapsed after the start of a shift operation, and determine completion of the dog disengaged stage when a predetermined dog disengagement determination period of time elapses after the start of the shift operation. A period of time having elapsed after the start of a shift operation corresponds to a period of time with a force toward the second stationary gear 6 kept applied to the movable gear 7.

Upon receipt of the notice of completion of the dog disengaged stage from the engaged stage determining unit 105, the movable gear control unit 102 carries out brake control (S3) . In the brake control, the movable gear control unit 102 outputs a negative voltage to the shift actuator 38. A negative voltage here refers to a voltage for applying a force directed opposite from a direction toward the second stationary gear 6 (hereinafter referred to as a brake force) to the movable gear 7. That is, applying a brake force to the movable gear 7 after completion of the dog disengaged stage as described above can decrease the moving speed of the movable gear 7 before the movable gear 7 reaches the position L2 at the dog bumping stage, to thereby modify the impact in bumping between the dog 74 of the movable gear 7 and the dog 64 of the second stationary gear 6.

At least one of the duty radio (a brake duty ratio) of a negative PWM signal in the brake control and the effective period of time t (brake period) of the brake control may be determined based on, e.g., speed information on the movable gear 7 supplied from the gear speed information obtaining unit 106. That is, by increasing the brake duty d with respect to a higher moving speed of the movable gear 7 moving toward the second stationary gear 6 (that is, a larger brake force is to be applied to the movable gear 7), it is possible to sufficiently reduce the moving speed of the movable gear 7. Further, it is also possible to make uniform the impact in bumping between the dog 74 of the movable gear 7 and the dog 64 of the second stationary gear 6. Note that the identical effect can be obtained with a longer braking period of time t.

After elapse of a predetermined period of time after the start of the brake control (S4: YES), the movable gear control unit 102 ends the brake control, and then begins dog pushing control (S5) . In the dog pushing control, the movable gear control unit 102 outputs a positive voltage to the shift actuator 38 to accelerate shifting to the dog engaged stage. Specifically, the movable gear control unit 102 outputs a positive PWM signal having a duty ratio smaller than the maximum value. With the above, a pushing force toward the second stationary gear 6 is applied to the movable gear 7, whereby insertion of the dog 74 of the movable gear 7 into the insertion part 69 of the second stationary gear 6 is accelerated.

The engaged stage determining unit 105 monitors completion of the dog engaged stage (S6), and upon determination of completion of the dog engaged stage (S6: YES), notifies the clutch control unit 103 of the completion. For example, the engaged stage determining unit 105 may determine completion of the dog engaged stage when the shift cam 33 reaches the predetermined position L3 at the dog engaged stage.

Upon receipt of the notice of completion of the dog engaged stage from the engaged stage determining unit 105, the clutch control unit 103 carries out a half-clutch control to reduce shock in shifting (S7). That is, the clutch control unit 103 keeps outputting a signal for leaving the clutch 40 in a half-clutch state to the clutch actuator 49.

After the half-clutch control begins and the rotation speed difference of the clutch 40 becomes closer to 0 (S8: YES), the movable gear control unit 102 begins shift return control to return the rotation angle of the shift actuator 38 to the original position. In addition, the clutch control unit 103 leaves the clutch 40 in a fully engaged state. After the shift return control ends and the clutch 40 comes to be in the fully engaged state (S10: YES), the shifting ends.

In the above described embodiment, the position information obtaining unit 104 obtains position information indicating the position of the movable gear 7, and the engaged stage determining unit 105 determines, based on the position information, whether or not the engagement between the dogs 52, 72 of the first stationary gear 5 and of the movable gear 7 is released. Then, upon determination that the engagement between the dogs 52, 72 of the first stationary gear 5 and of the movable gear 7 is released, the movable gear control unit 102 applies a brake force to the movable gear 7. This arrangement makes it easier to set a time for applying a brake force to the movable gear 7 to a time before the dogs 74, 64 of the movable gear 7 and of the second stationary gear 6 contact each other.

According to the above described embodiment, the position information obtaining unit 104 obtains information on the rotation angle of the shift actuator 38 as the position information. This makes it possible to obtain position information on the movable gear 7 without providing a structure for directly determining the position of the movable gear 7.

Further, in the above described embodiment, the position information obtaining unit 104 obtains information on the rotation angle of the shift cam 33 as the position information. This makes it possible to obtain position information on the movable gear 7 without providing a structure for directly determining the position of the movable gear 7.

Further, in the above described embodiment, the movable gear control unit 102 begins applying a force in an opposite direction to the movable gear 7 after elapse of a predetermined period of time after the movable gear 7 starts moving toward the second speed. This makes it possible, without using the position information on the movable gear 7, to apply a brake force to the movable gear 7 before the dogs 74, 64 of the movable gear 7 and of the second stationary gear 6 contact each other.

Further, in the above described embodiment, the gear speed information obtaining unit 106 obtains speed information indicating the moving speed of the movable gear 7, and the movable gear control unit 102 determines the magnitude of a brake force according to the moving speed of the movable gear 7. This makes it possible to sufficiently reduce the moving speed of the movable gear 7 before the dogs 74, 64 of the movable gear 7 and of the second stationary gear 6 contact each other even though the moving speed of the movable gear 7 is high.

Further, in the above described embodiment, the gear speed information obtaining unit 106 obtains speed information indicating the moving speed of the movable gear 7, and the movable gear control unit 102 determines according to the moving speed of the movable gear 7, the duration of a brake force kept applied to the movable gear 7. With the above, even though the moving speed of the movable gear 7 is high, the moving speed of the movable gear 7 can be sufficiently reduced before the dogs 74, 64 of the movable gear 7 and of the second stationary gear 6 contact each other.

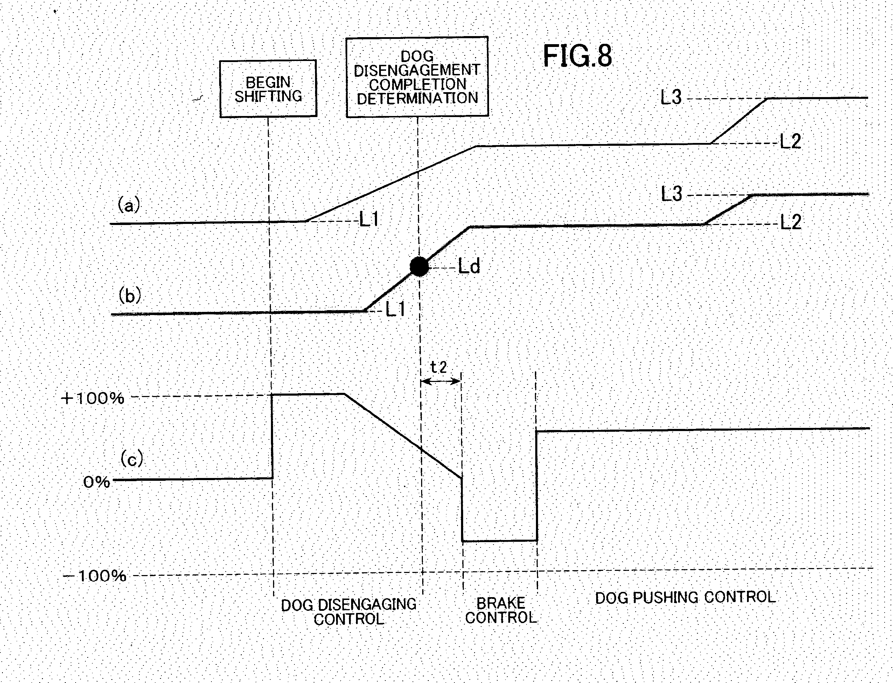

Fig. 8 is a timing chart for an example operation according to a first modified example. In the following, a point identical to that in the above described example operation will not be described in detail.

In this example, upon determination of completion of the dog disengaged stage and thereafter elapse of a predetermined waiting period of time t2, the movable gear control unit 102 begins brake control. Note that the waiting period of time t2 is set within a range with the movable gear 7 not reaching a position at the dog bumping stage. With the above, as a time at which to start application of a brake force to the movable gear 7 is set closer to a time at which the movable gear 7 reaches the position L2 at the dog bumping stage, it is possible to realize prompter shift control.

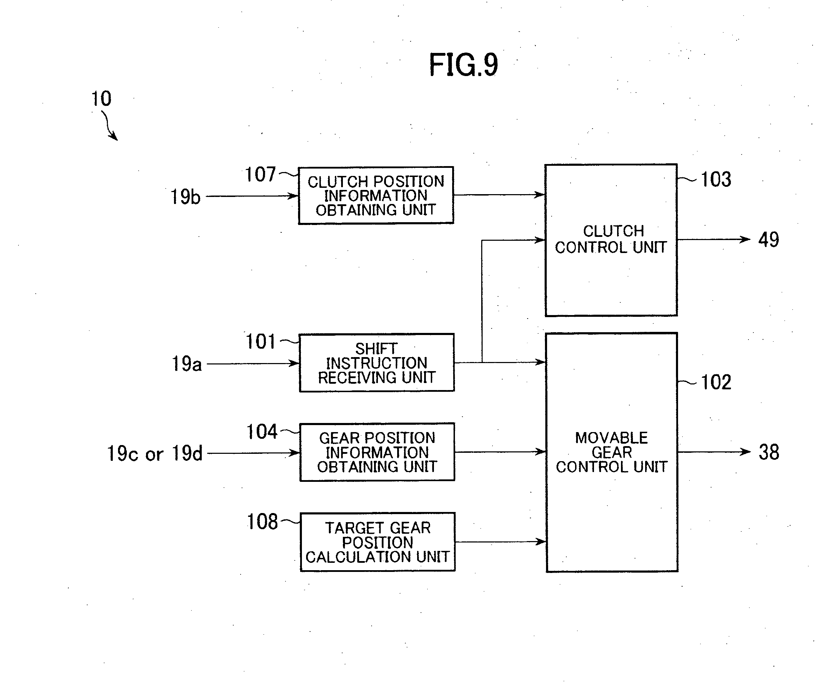

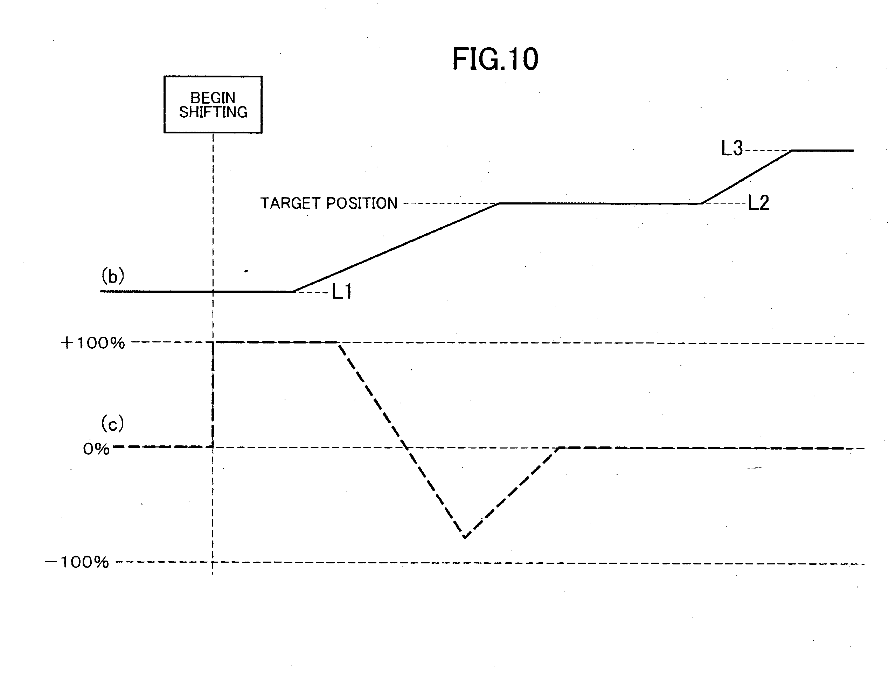

Fig. 9 is a block diagram showing an example functional structure of a second modified example. Fig. 10 is a timing chart for an example operation according to the second modified example. In the following, a point identical to that in the above described operation example will not be described in detail.

In this example, the control device 10 has a gear target position calculation unit 108 for calculating a target position of the movable gear 7. The movable gear control unit 102 carries out feedback control for changing an output from the shift actuator 38 according to the difference between a target position of the movable gear 7 output from the gear target position calculation unit 108 and the current position of the movable gear 7 output from the gear position information obtaining unit 104. Note that the feedback control is e.g., PID control, and that the target position of the movable gear 7 is set such that a brake force is applied to the movable gear 7 before the movable gear 7 reaches the position L2 at the dog bumping stage. For example, with the target position of the movable gear 7 set to the position L2 or a nearby position at the dog bumping stage, a brake force is applied to the movable gear 7 when the movable gear 7 approaches the position L2 at the dog bumping stage.

With the above, according to the feedback control in this example as well, the moving speed of the movable gear 7 can be decreased before the dogs 74, 64 of the movable gear 7 and of the second stationary gear 6 contact each other.

Note that the gear target position calculation unit 108 may update the target position of the movable gear 7 to the position L3 or a nearby position at the dog engaged stage after the movable gear 7 reaches the position L2 at the dog bumping stage. This makes it possible to generate a pushing force after the movable gear 7 reaches the position L2 at the dog engaged stage to thereby accelerate completion of the dog engaged stage.

1 two-wheeled motor vehicle, 2 front wheel, 3 rear wheel, 4 front fork, 81 steering shaft, 83 steering, 9 seat, 10 control device, 11 engine unit, 15 transmission apparatus, 19a shift switch, 19b clutch sensor, 19c shift actuator position sensor, 19d shift cam position sensor, 1i to 6i, 1h to 6h, 34i gear (34i, 5h, 6h movable gear), 21a primary gear, 30 transmission mechanism, 31 input shaft, 32 output shaft, 33 shift cam, 33d cam slot, 35 engagement slot, 36 shift fork, 37 shift rod, 38 shift actuator, 39 dog , 40 clutch, 41a primary gear, 41 driving member, 42 following member, 49 clutch actuator, 5 first stationary gear, 52 dog, 57 insertion part, 6 second stationary gear, 64 dog, 69 insertion part, 7 movable gear, 72 dog, 74 dog, 77 insertion part, 79 insertion part, 101 shift instruction receiving unit, 102 movable gear control unit, 103 clutch control unit, 104 gear position information obtaining unit, 105 engaged stage determining unit, 106 gear speed information obtaining unit, 107 clutch position information obtaining unit, 108 gear target position calculation unit.

## Claims

1. A transmission apparatus (15), comprising:
a dog clutch transmission mechanism (30) including
a first stationary gear (5) capable of relative rotation relative to a shaft (31) and incapable of movement in a shaft direction,
a second stationary gear (6) capable of relative rotation relative to the shaft (31) and incapable of movement in the shaft direction, and
a movable gear (7) provided on the shaft (31) between the first stationary gear (5) and the second stationary gear (6), and incapable of relative rotation relative to the shaft (31) and capable of movement in the shaft direction, in which
a dog (72) for being engaged with a dog (52) formed on a lateral surface of the first stationary gear (5) to transmit rotation of the shaft (31) to the first stationary gear (5) is formed on one lateral surface of the movable gear (7), and
a dog (74) for being engaged with a dog (64) formed on a lateral surface of the second stationary gear (6) to transmit the rotation of the shaft (31) to the second stationary gear (6) is formed on another lateral surface of the movable gear (7);
an actuator (38) for moving the movable gear (7) in the shaft direction; and
a control device (10) for driving the actuator (38),
**characterized in that**
the control device is configured to drive the actuator (38) to apply, when the movable gear (7) moves from a state in which the dog (72) thereof is engaged with the dog (52) of the first stationary gear (5) toward the second stationary gear (6), a force directed opposite from a direction toward the second stationary gear (6) to the movable gear (7) after engagement between the dog (52) of the first stationary gear (5) and the dog (72) of the movable gear (7) is released, until the movable gear (7) reaches a position where the dog (74) of the movable gear (7) contacts the dog (64) of the second stationary gear (6).

2. The transmission apparatus (15) according to claim 1, wherein the control device (10) obtains position information indicating a position of the movable gear (7),
determines, based on the position information, whether or not the engagement between the dog (52) of the first stationary gear (5) and the dog (72) of the movable gear (7) is released, and
applies, after determination that the engagement between the dog (52) of the first stationary gear (5) and the dog (72) of the movable gear (7) is released, the force directed opposite to the movable gear (7).

3. The transmission apparatus (15) according to claim 2, wherein
the transmission mechanism (30) further includes a shift cam (33) for converting rotation of the actuator (38) into movement of the movable gear (7), and
the control device (10) obtains information indicating a rotation angle of the shift cam (33) as the position information.

4. The transmission apparatus (15) according to claim 1, wherein the control device (10) applies the force directed opposite to the movable gear (7) after elapse of a predetermined period of time either after the movable gear (7) starts moving toward the second stationary gear (6) or after the engagement between the dog (52) of the first stationary gear (5) and the dog (72) of the movable gear (7) is released.

5. The transmission apparatus (15) according to claim 1, wherein the control device (10) obtains speed information indicating a moving speed of the movable gear (7), and determines a magnitude of the force directed opposite according to the moving speed of the movable gear (7), and/or determines a duration of application of the force directed opposite according to the moving speed of the movable gear (7).

6. The transmission apparatus (15) according to claim 1, wherein
the control device (10) applies a force to the movable gear (7) according to a difference between a target position and a current position of the movable gear (7), and
the target position of the movable gear (7) is determined such that the force directed opposite is applied to the movable gear (7) before the dog (74) of the movable gear (7) contacts the dog (64) of the second stationary gear (6).

7. A transmission apparatus (15), comprising:
a dog clutch transmission mechanism (30), including
a first stationary gear (5i, 6i) capable of relative rotation relative to a shaft (31) and incapable of movement in a shaft direction,
a first movable gear (34i) provided to the shaft (31) where the first stationary gear (5i, 6i) is provided, and incapable of relative rotation relative to the shaft (31) and capable of movement in the shaft direction,
a second stationary gear (1 h to 4h) capable of relative rotation relative to the shaft (31) where the first stationary gear (5i, 6i) is provided on a different shaft (32) and incapable of movement in a shaft direction, and
a second movable gear (5h, 6h) provided to the shaft (32) where the second stationary gear (1 h to 4h) is provided, and incapable of relative rotation relative to the shaft (32) and capable of movement in the shaft direction, and
a shift cam (33) for moving the first movable gear (34i) and the second movable gear (5h, 6h) in the shaft direction, in which
a dog for being engaged with a dog (39) formed on a lateral surface of the first stationary gear (5i, 6i) to transmit rotation of the shaft (31) where the first stationary gear (5i, 6i) is provided to the first stationary gear (5i, 6i) is formed on a lateral surface of the first movable gear (34i) that is opposed to the first stationary gear (5i, 6i), and
a dog for being engaged with a dog (39) formed on a lateral surface of the second stationary gear (1h to 4h) to transmit rotation of the shaft (31) where the second stationary gear (1 h to 4h) is provided to the second stationary gear (1 h to 4h) is formed on a lateral surface of the second movable gear (5h, 6h) that is opposed to the second stationary gear (1 h to 4h);
an actuator (38) for driving the shift cam (33); and
a control device (10) for driving the actuator (38),
**characterized in that**
the control device is configured to drive the actuator (38) to apply, when the second movable gear (5h, 6h) moves toward the second stationary gear (1h to 4h) from a state in which the dog (39) of the first stationary gear (5i, 6i) being engaged with the dog of the first movable gear (34i), a force directed opposite from a direction toward the second stationary gear (1 h to 4h) to the second movable gear (5h, 6h) after engagement between the dog (39) of the first stationary gear (5i, 6i) and the dog of the first movable gear (34i) is released, until the second movable gear (5h, 6h) reaches a position where the dog of the second movable gear (5h, 6h) contacts the dog (39) of the second stationary gear (1 h to 4h).

8. The transmission apparatus (15) according to claim 7, wherein the control device (10) obtains position information indicating positions of the first movable gear (34i) and of the second movable gear (5h, 6h),
determines, based on the position information, whether or not the engagement between the dog (39) of the first stationary gear (5i, 6i) and the dog of the first movable gear (34i) is released, and
applies, after determination that the engagement between the dog (39) of the first stationary gear (5i, 6i) and the dog of the first movable gear (34i) is released, the force directed opposite to the second movable gear (5h, 6h).

9. The transmission apparatus (15) according to claim 2 or 8, wherein the control device (10) obtains information indicating a rotation angle of the actuator (38) as the position information.

10. The transmission apparatus (15) according to claim 8, wherein the control device (10) obtains information indicating a rotation angle of the shift cam (33) as the position information.

11. The transmission apparatus (15) according to claim 7, wherein the control device (10) applies the force directed opposite to the second movable gear (5h, 6h) after elapse of a predetermined period of time either after the second movable gear (5h, 6h) starts moving toward the second stationary gear (1 h to 4h) or after the engagement between the dog (39) of the first stationary gear (5i, 6i) and the dog of the first movable gear (34i) is released.

12. The transmission apparatus (15) according to claim 8, wherein the control device (10) obtains speed information indicating a moving speed of the second movable gear (5h, 6h), and determines a magnitude of the force directed opposite according to the moving speed of the second movable gear (5h, 6h) and/or determines a duration of application of the force directed opposite according to the moving speed of the second movable gear (5h, 6h).

13. The transmission apparatus (15) according to claim 7, wherein
the control device (10) applies a force to the second movable gear (5h, 6h) according to a difference between a target position and a current position of the second movable gear (5h, 6h), and
the target position of the second movable gear (5h, 6h) is determined such that the force directed opposite is applied to the second movable gear (5h, 6h) before the dog of the second movable gear (5h, 6h) contacts the dog (39) of the second stationary gear (1 h to 4h).

14. A saddle-riding type vehicle comprising a transmission apparatus (15) according to anyone of the previous claims.

## Patentansprüche

1. Getriebeeinrichtung (15), umfassend:
einen Mitnehmerkupplungsgetriebemechanismus (30), der beinhaltet:
ein erstes stationäres Getrieberad (5), das zu einer Relativdrehung relativ zu einer Welle (31) fähig und zu einer Bewegung in einer Wellenrichtung nicht fähig ist,
ein zweites stationäres Getrieberad (6), das zu einer Relativdrehung relativ zu der Welle (31) fähig und zu einer Bewegung in der Wellenrichtung nicht fähig ist, und
ein bewegliches Getrieberad (7), das an der Welle (31) zwischen dem ersten stationären Getrieberad (5) und dem zweiten stationären Getrieberad (6) vorgesehen sowie zu einer Relativdrehung relativ zu der Welle (31) nicht fähig und zu einer Bewegung in der Wellenrichtung fähig ist, wobei:
ein Mitnehmer (72) zur Herstellung eines Eingriffes mit einem Mitnehmer (52) mit Ausbildung an einer seitlichen Oberfläche des ersten stationären Getrieberades (5) zur Übertragung einer Drehung der Welle (31) auf das erste stationäre Getrieberad (5) an einer seitlichen Oberfläche des beweglichen Getrieberades (7) ausgebildet ist, und
ein Mitnehmer (74) zur Herstellung eines Eingriffes mit einem Mitnehmer (64) mit Ausbildung an einer seitlichen Oberfläche des zweiten stationären Getrieberades (6) zur Übertragung der Drehung der Welle (31) auf das zweite stationäre Getrieberad (6) an einer weiteren seitlichen Oberfläche des beweglichen Getrieberades (7) ausgebildet ist;
ein Stellglied (38) zum Bewegen des beweglichen Getrieberades (7) in der Wellenrichtung; und
eine Steuervorrichtung (10) zum Antreiben des Stellgliedes (38),
**dadurch gekennzeichnet, dass**
die Steuervorrichtung ausgelegt ist zum Antreiben des Stellgliedes (38), um dann, wenn sich das bewegliche Getrieberad (7) von einem Zustand, in dem der Mitnehmer (72) hiervon in Eingriff mit dem Mitnehmer (52) des ersten stationären Getrieberades (5) ist, hin zu dem zweiten stationären Getrieberad (6) bewegt, eine Kraft in Gegenrichtung von einer Richtung hin zu dem zweiten stationären Getrieberad (6) auf das bewegliche Getrieberad (7) auszuüben, nachdem der Eingriff zwischen dem Mitnehmer (52) des ersten stationären Getrieberades (5) und dem Mitnehmer (72) des beweglichen Getrieberades (7) freigegeben ist, bis das bewegliche Getrieberad (7) eine Position erreicht, in der der Mitnehmer (74) des beweglichen Getrieberades (7) den Mitnehmer (64) des zweiten stationären Getrieberades (6) kontaktiert.

2. Getriebeeinrichtung (15) nach Anspruch 1, wobei die Steuervorrichtung (10) eine Positionsinformation zur Angabe einer Position des beweglichen Getrieberades (7) ermittelt,
auf Grundlage der Positionsinformation bestimmt, ob der Eingriff zwischen dem Mitnehmer (52) des ersten stationären Getrieberades (5) und dem Mitnehmer (72) des beweglichen Getrieberades (7) freigegeben ist, und
nach einer Bestimmung, dass der Eingriff zwischen dem Mitnehmer (52) des ersten stationären Getrieberades (5) und dem Mitnehmer (72) des beweglichen Getrieberades (7) freigegeben ist, die Kraft in Gegenrichtung auf das bewegliche Getrieberad (7) ausübt.

3. Getriebeeinrichtung (15) nach Anspruch 2, wobei:
der Getriebemechanismus (30) des Weiteren eine Verschiebungsnocke (33) zum Umwandeln einer Drehung des Stellgliedes (38) in eine Bewegung des beweglichen Getrieberades (7) beinhaltet, und
die Steuervorrichtung (10) Information zur Angabe eines Drehwinkels der Verschiebungsnocke (33) als Positionsinformation ermittelt.

4. Getriebeeinrichtung (15) nach Anspruch 1, wobei die Steuervorrichtung (10) die Kraft in Gegenrichtung auf das bewegliche Getrieberad (7) nach Verstreichen einer vorbestimmten Zeitspanne entweder nach Beginn einer Bewegung des beweglichen Getrieberades (7) hin zu dem zweiten stationären Getrieberad (6) oder nach Freigabe des Eingriffes zwischen dem Mitnehmer (52) des ersten stationären Getrieberades (5) und dem Mitnehmer (72) des beweglichen Getrieberades (7) ausübt.

5. Getriebeeinrichtung (15) nach Anspruch 1, wobei die Steuervorrichtung (10) eine Geschwindigkeitsinformation zur Angabe einer Bewegungsgeschwindigkeit des beweglichen Getrieberades (7) ermittelt und eine Größe der Kraft in Gegenrichtung entsprechend der Bewegungsgeschwindigkeit des beweglichen Getrieberades (7) bestimmt und/oder eine Dauer der Ausübung der Kraft in Gegenrichtung entsprechend der Bewegungsgeschwindigkeit des beweglichen Getrieberades (7) bestimmt.

6. Getriebeeinrichtung (15) nach Anspruch 1, wobei:
die Steuervorrichtung (10) eine Kraft auf das bewegliche Getrieberad (7) entsprechend einer Differenz zwischen einer Sollposition und einer aktuellen Position des beweglichen Getrieberades (7) ausübt, und
die Sollposition des beweglichen Getrieberades (7) derart bestimmt wird, dass die Kraft in Gegenrichtung auf das bewegliche Getrieberad (7) vor einem Kontaktieren des Mitnehmers (74) des beweglichen Getrieberades (7) mit dem Mitnehmer (64) des zweiten stationären Getrieberades (6) ausgeübt wird.

7. Getriebeeinrichtung (15), umfassend:
einen Mitnehmerkupplungsgetriebemechanismus (70), der beinhaltet:
ein erstes stationäres Getrieberad (5i, 6i), das zu einer Relativdrehung relativ zu einer Welle (31) fähig und zu einer Bewegung in einer Wellenrichtung nicht fähig ist,
ein erstes bewegliches Getrieberad (34i), das an der Welle (31), wo das erste stationäre Getrieberad (5i, 6i) vorgesehen ist, vorgesehen ist sowie zu einer Relativdrehung relativ zu der Welle (31) nicht fähig und zu einer Bewegung in der Wellenrichtung fähig ist,
ein zweites stationäres Getrieberad (1 h bis 4h), das zu einer Relativdrehung relativ zu der Welle (31), wo das erste stationäre Getrieberad (5i, 6i) vorgesehen ist, an einer anderen Welle (32) fähig ist und zu einer Bewegung in einer Wellenrichtung nicht fähig ist, und
ein zweites bewegliches Getrieberad (5h, 6h), das an der Welle (32), wo das zweite stationäre Getrieberad (1 h bis 4h) vorgesehen ist, vorgesehen ist sowie zu einer Relativdrehung relativ zu der Welle (32) nicht fähig und zu einer Bewegung in der Wellenrichtung fähig ist, und
eine Verschiebungsnocke (33) zum Bewegen des ersten beweglichen Getrieberades (34i) und des zweiten beweglichen Getrieberades (5h, 6h) in der Wellenrichtung, wobei:
ein Mitnehmer zur Herstellung eines Eingriffes mit einem Mitnehmer (39) mit Ausbildung an einer seitlichen Oberfläche des ersten stationären Getrieberades (5i, 6i) zur Übertragung einer Drehung der Welle (31), wo das erste stationäre Getrieberad (5i, 6i) vorgesehen ist, auf das erste stationäre Getrieberad (5i, 6i) an einer seitlichen Oberfläche des ersten beweglichen Getrieberades (34i) entgegengesetzt zu dem ersten stationären Getrieberad (5i, 6i) ausgebildet ist, und
ein Mitnehmer zur Herstellung eines Eingriffes mit einem Mitnehmer (39) mit Ausbildung an einer seitlichen Oberfläche des zweiten stationären Getrieberades (1h bis 4h) zur Übertragung einer Drehung der Welle (31), wo das zweite stationäre Getrieberad (1 h bis 4h) vorgesehen ist, auf das zweite stationäre Getrieberad (1 h bis 4h) an einer seitlichen Oberfläche des zweiten beweglichen Getrieberades (5h, 6h) entgegengesetzt zu dem zweiten stationären Getrieberad (1 h bis 4h) ausgebildet ist;
ein Stellglied (38) zum Antreiben der Verschiebungsnocke (33); und
eine Steuervorrichtung (10) zum Antreiben des Stellgliedes (38),
**dadurch gekennzeichnet, dass**
die Steuervorrichtung ausgelegt ist zum Antreiben des Stellgliedes (38), um dann, wenn sich das zweite bewegliche Getrieberad (5h, 6h) hin zu dem zweiten stationären Getrieberad (1 h bis 4h) von einem Zustand bewegt, in dem der Mitnehmer (39) des ersten stationären Getrieberades (5i, 6i) in Eingriff mit dem Mitnehmer des ersten beweglichen Getrieberades (34i) ist, eine Kraft in Gegenrichtung von einer Richtung hin zu dem zweiten stationären Getrieberad (1h bis 4h) auf das zweite bewegliche Getrieberad (5h, 6h) auszüben, nachdem der Eingriff zwischen dem Mitnehmer (39) des ersten stationären Getrieberades (5i, 6i) und dem Mitnehmer des ersten beweglichen Getrieberades (34i) freigegeben ist, bis das zweite bewegliche Getrieberad (5h, 6h) eine Position erreicht, in der der Mitnehmer des zweiten beweglichen Getrieberades (5h, 6h) den Mitnehmer (39) des zweiten stationären Getrieberades (1h bis 4h) kontaktiert.

8. Getriebeeinrichtung (15) nach Anspruch 7, wobei die Steuervorrichtung (10) eine Positionsinformation zur Angabe von Positionen des ersten beweglichen Getrieberades (34i) und des zweiten beweglichen Getrieberades (5h, 6h) ermittelt,
auf Grundlage der Positionsinformation bestimmt, ob der Eingriff zwischen dem Mitnehmer (39) des ersten stationären Getrieberades (5i, 6i) und dem Mitnehmer des ersten beweglichen Getrieberades (34i) freigegeben ist, und nach Bestimmung, dass der Eingriff zwischen dem Mitnehmer (39) des ersten stationären Getrieberades (5i, 6i) und dem Mitnehmer des ersten beweglichen Getrieberades (34i) freigegeben ist, die Kraft in Gegenrichtung auf das zweite bewegliche Getrieberad (5h, 6h) ausübt.

9. Getriebeeinrichtung (15) nach Anspruch 2 oder 8, wobei die Steuervorrichtung (10) Information zur Angabe eines Drehwinkels des Stellgliedes (38) als Positionsinformation ermittelt.

10. Getriebeeinrichtung (15) nach Anspruch 8, wobei die Steuervorrichtung (10) Information zur Angabe eines Drehwinkels der Verschiebungsnocke (33) als Positionsinformation ermittelt.

11. Getriebeeinrichtung (15) nach Anspruch 7, wobei die Steuervorrichtung (10) die Kraft in Gegenrichtung auf das zweite bewegliche Getrieberad (5h, 6h) nach Verstreichen einer vorbestimmten Zeitspanne entweder nach Beginn einer Bewegung des zweiten beweglichen Getrieberades (5h, 6h) hin zu dem zweiten stationären Getrieberad (1 h bis 4h) oder nach Freigabe des Eingriffes zwischen dem Mitnehmer (39) des ersten stationären Getrieberades (5i, 6i) und dem Mitnehmer des ersten beweglichen Getrieberades (34i) ausübt.

12. Getriebeeinrichtung (15) nach Anspruch 8, wobei die Steuervorrichtung (10) eine Geschwindigkeitsinformation zur Angabe eine Bewegungsgeschwindigkeit des zweiten beweglichen Getrieberades (5h, 6h) ermittelt und eine Größe der Kraft in Gegenrichtung entsprechend der Bewegungsgeschwindigkeit des zweiten beweglichen Getrieberades (5h, 6h) bestimmt und/oder eine Dauer der Ausübung der Kraft in Gegenrichtung entsprechend der Bewegungsgeschwindigkeit des zweiten beweglichen Getrieberades (5h, 6h) bestimmt.

13. Getriebeeinrichtung (15) nach Anspruch 7, wobei
die Steuervorrichtung (10) eine Kraft auf das zweite bewegliche Getrieberad (5h, 6h) entsprechend einer Differenz zwischen einer Sollposition und einer aktuellen Position des zweiten beweglichen Getrieberades (5h, 6h) ausübt, und
die Sollposition des zweiten beweglichen Getrieberades (5h, 6h) derart bestimmt wird, dass die Kraft in Gegenrichtung auf das zweite bewegliche Getrieberad (5h, 6h) vor einem Kontaktieren des Mitnehmers des zweiten beweglichen Getrieberades 5h, 6h) mit dem Mitnehmer (39) des zweiten stationären Getrieberades (1 h bis 4h) ausgeübt wird.

14. Fahrzeug vom Sattelsitztyp, umfassend einen Getriebeeinrichtung (15) nach einem der vorhergehenden Ansprüche.

## Revendications

1. Dispositif de transmission (15) comprenant :
un mécanisme de transmission à embrayage à griffes (30) incluant
un premier engrenage fixe (5) capable d'une rotation par rapport à un arbre (31) et incapable d'un mouvement dans la direction de l'arbre,
un second engrenage fixe (6) capable d'une rotation par rapport à l'arbre (31) et incapable d'un mouvement dans la direction de l'arbre, et
un engrenage mobile (7) prévu sur l'arbre (31) entre le premier engrenage fixe (5) et le second engrenage fixe (6), et incapable d'une rotation par rapport à l'arbre (31) et capable d'un mouvement dans la direction de l'arbre, dans lequel
une griffe (72) destinée à être en prise avec une griffe (52) formée sur une surface latérale du premier engrenage fixe (5) pour transmettre la rotation de l'arbre (31) au premier engrenage fixe (5) est formée sur une surface latérale de l'engrenage mobile (7), et
une griffe (74) destinée à être en prise avec une griffe (64) formée sur une surface latérale du second engrenage fixe (6) pour transmettre la rotation de l'arbre (31) au second engrenage fixe (6) est formée sur une autre surface latérale de l'engrenage mobile (7), et
un dispositif d'actionnement (38) pour déplacer l'engrenage mobile (7) dans la direction de l'arbre ;
un dispositif de commande (10) pour commander le dispositif d'actionnement (38),
**caractérisé en ce que**
le dispositif de commande est configuré pour commander le dispositif d'actionnement (38) pour, lorsque l'engrenage mobile (7) se déplace d'un état dans lequel sa griffe (72) est en prise avec la griffe (52) du premier engrenage fixe (5) vers le second engrenage fixe (6), appliquer à l'engrenage mobile (7) une force dirigée à l'opposé de la direction vers le second engrenage fixe (6) après libération de la prise entre la griffe (52) du premier engrenage fixe (5) et la griffe (72) de l'engrenage mobile (7), jusqu'à ce que l'engrenage mobile (7) atteigne une position où la griffe (74) de l'engrenage mobile (7) est en contact avec la griffe (64) du second engrenage fixe (6).

2. Dispositif de transmission (15) selon la revendication 1, dans lequel le dispositif de commande (10) obtient des informations de position indiquant la position de l'engrenage mobile (7),
détermine, en se basant sur les informations de position, si la prise entre la griffe (52) du premier engrenage fixe (5) et la griffe (72) de l'engrenage mobile (7) est ou non libérée, et
après détermination du fait que la prise entre la griffe (52) du premier engrenage fixe (5) et la griffe (72) de l'engrenage mobile (7) est libérée, applique la force dirigée à l'opposé de l'engrenage mobile (7).

3. Dispositif de transmission (15) selon la revendication 2, dans lequel
le mécanisme de transmission (30) comporte en outre une came de décalage (33) pour convertir la rotation du dispositif d'actionnement (38) en mouvement de l'engrenage mobile (7), et
le dispositif de commande (10) obtient des informations indiquant l'angle de rotation de la came de décalage (33) en tant qu'informations de position.

4. Dispositif de transmission (15) selon la revendication 1, dans lequel le dispositif de commande (10) applique la force dirigée à l'opposé de l'engrenage mobile (7) après écoulement d'une période de temps prédéterminée, soit après que l'engrenage mobile (7) commence à se déplacer vers le second engrenage fixe (6), soit après que la prise entre la griffe (52) du premier engrenage fixe (5) et la griffe (72) de l'engrenage mobile (7) est libérée.

5. Dispositif de transmission (15) selon la revendication 1, dans lequel le dispositif de commande (10) obtient des informations de vitesse indiquant la vitesse de déplacement de l'engrenage mobile (7), et détermine l'amplitude de la force dirigée à l'opposé en fonction de la vitesse de déplacement de l'engrenage mobile (7) et/ou détermine la durée d'application de la force dirigée à l'opposé en fonction de la vitesse de déplacement de l'engrenage mobile (7).

6. Dispositif de transmission (15) selon la revendication 1, dans lequel
le dispositif de commande (10) applique une force à l'engrenage mobile (7) en fonction de la différence entre une position cible et la position courante de l'engrenage mobile (7), et
la position cible de l'engrenage mobile (7) est déterminée de sorte que la force dirigée à l'opposé est appliquée à l'engrenage mobile (7) avant que la griffe (74) de l'engrenage mobile (7) soit en contact avec la griffe (64) du second engrenage fixe (6).

7. Dispositif de transmission (15) comprenant :
un mécanisme de transmission à embrayage à griffes (30) incluant
un premier engrenage fixe (5i, 6i) capable d'une rotation par rapport à un arbre (31) et incapable d'un mouvement dans la direction de l'arbre,
un premier engrenage mobile (34i) prévu sur l'arbre (31) où est prévu le premier engrenage fixe (5i, 6i), et incapable d'une rotation par rapport à l'arbre (31) et capable d'un mouvement dans la direction de l'arbre,
un second engrenage fixe (1h à 4h) capable d'une rotation par rapport à l'arbre (31) où le premier engrenage fixe (5i, 6i) est prévu sur un arbre différent (32) et incapable d'un mouvement dans la direction de l'arbre, et
un second engrenage mobile (5h, 6h) prévu sur l'arbre (32) où est prévu le second engrenage fixe (1 h à 4h), et incapable d'une rotation par rapport à l'arbre (32) et capable d'un mouvement dans la direction de l'arbre, et
une came de décalage (33) pour déplacer le premier engrenage mobile (34i) et le second engrenage mobile (5h, 6h) dans la direction de l'arbre, dans lequel
une griffe destinée à être en prise avec une griffe (39) formée sur une surface latérale du premier engrenage fixe (5i, 6i) pour transmettre la rotation de l'arbre (31) où est prévu le premier engrenage fixe (5i, 6i) au premier engrenage fixe (5i, 6i) est formée sur une surface latérale du premier engrenage mobile (34i) qui est opposé au premier engrenage fixe (5i, 6i), et
une griffe destinée à être en prise avec une griffe (39) formée sur une surface latérale du second engrenage fixe (1h à 4h) pour transmettre la rotation de l'arbre (31) où est prévu le second engrenage fixe (1h à 4h) au second engrenage fixe (1h à 4h) est formée sur une surface latérale du second engrenage mobile (5h, 6h) qui est opposé au second engrenage fixe (1h à 4h) ;
un dispositif d'actionnement (38) pour commander la came de décalage (33) ; et
un dispositif de commande (10) pour commander le dispositif d'actionnement (38),
**caractérisé en ce que**
le dispositif de commande est configuré pour commander le dispositif d'actionnement (38) pour, lorsque le second engrenage mobile (5h, 6h) se déplace vers le second engrenage fixe (1h à 4h) d'un état dans lequel la griffe (39) du premier engrenage fixe (5i, 6i) est en prise avec la griffe du premier engrenage mobile (34i), appliquer au second engrenage mobile (5h, 6h) une force dirigée à l'opposé de la direction vers le second engrenage fixe (1h à 4h) après libération de la prise entre la griffe (39) du premier engrenage fixe (5i, 6i) et la griffe du premier engrenage mobile (34i), jusqu'à ce que le second engrenage mobile (5h, 6h) atteigne une position où la griffe du second engrenage mobile (5h, 6h) est en contact avec la griffe (39) du second engrenage fixe (1h à 4h).

8. Dispositif de transmission (15) selon la revendication 7, dans lequel le dispositif de commande (10) obtient des informations de position indiquant les positions du premier engrenage mobile (34i) et du second engrenage mobile (5h, 6h),
détermine, en se basant sur les informations de position, si la prise entre la griffe (39) du premier engrenage fixe (5i, 6i) et la griffe du premier engrenage mobile (34i) est ou non libérée, et
après détermination du fait que la prise entre la griffe (39) du premier engrenage fixe (5i, 6i) et la griffe du premier engrenage mobile (34i) est libérée, applique la force dirigée à l'opposé du second engrenage mobile (5h, 6h).

9. Dispositif de transmission (15) selon la revendication 2 ou 8, dans lequel le dispositif de commande (10) obtient des informations indiquant l'angle de rotation du dispositif d'actionnement (38) en tant qu'informations de position.

10. Dispositif de transmission (15) selon la revendication 8, dans lequel le dispositif de commande (10) obtient des informations indiquant l'angle de rotation de la came de décalage (33) en tant qu'informations de position.

11. Dispositif de transmission (15) selon la revendication 7, dans lequel le dispositif de commande (10) applique la force dirigée à l'opposé du second engrenage mobile (5h, 6h) après écoulement d'une période de temps prédéterminée, soit après que le second engrenage mobile (5h, 6h) commence à se déplacer vers le second engrenage fixe (1h à 4h), soit après que la prise entre la griffe (39) du premier engrenage fixe (5i, 6i) et la griffe du premier engrenage mobile (34i) est libérée.

12. Dispositif de transmission (15) selon la revendication 8, dans lequel le dispositif de commande (10) obtient des informations de vitesse indiquant la vitesse de déplacement du second engrenage mobile (5h, 6h), et détermine l'amplitude de la force dirigée à l'opposé en fonction de la vitesse de déplacement du second engrenage mobile (5h, 6h) et/ou détermine la durée d'application de la force dirigée à l'opposé en fonction de la vitesse de déplacement du second engrenage mobile (5h, 6h).

13. Dispositif de transmission (15) selon la revendication 7, dans lequel
le dispositif de commande (10) applique une force au second engrenage mobile (5h, 6h) en fonction de la différence entre une position cible et la position courante du second engrenage mobile (5h, 6h), et
la position cible du second engrenage mobile (5h, 6h) est déterminée de sorte que la force dirigée à l'opposé est appliquée au second engrenage mobile (5h, 6h) avant que la griffe du second engrenage mobile (5h, 6h) soit en contact avec la griffe (39) du second engrenage fixe (1h à 4h).

14. Véhicule à selle comprenant un dispositif de transmission (15) selon l'une quelconque des revendications précédentes.
